# EUROPÄISCHE PATENTSCHRIFT

(11) **EP 0 990 330 B1**
(45) Veröffentlichungstag und Bekanntmachung des Hinweises auf die Patenterteilung: **21.01.2009**
(21) Anmeldenummer: 98936200.9
(22) Anmeldetag: 11.06.1998
(51) Int. Cl.: H04L 12/40, H04L 12/26

(54) **REDUNDANTER SERIENBUS**
REDUNDANT SERIAL BUS
BUS SERIE REDONDANT

(30) Priorität: 20.06.1997 DE 19726158
(43) Veröffentlichungstag der Anmeldung: 05.04.2000
(73) Patentinhaber: ABB AG, 68309 Mannheim (DE)
(72) Erfinder: JANTZEN, Wolfgang, D-32425 Minden (DE)
(74) Vertreter: Meissner, Peter E.
(86) Internationale Anmeldenummer: PCT/DE1998/001656
(87) Internationale Veröffentlichungsnummer: WO 1998/059464

(56) Entgegenhaltungen:
- EP-A- 0 282 628
- DE-A- 19 513 316
- US-A- 4 630 265
- US-A- 5 422 877

## Beschreibung

Die Erfindung betrifft einen redundanten Serienbus und ein Verfahren zu dessen Betrieb.

Das allgemeine Problem besteht darin, für sich bekannte serielle Bussysteme ohne systemintegrierte Redundanzmittel, das betrifft regelmäßig genormte und damit interoperable Bussysteme, durch redundant ausgeführte Buslinien miteinander zu verbinden.

Darüber hinaus besteht bei der Auswahl einer der redundant ausgeführte Buslinien zur Kommunikation das Problem, daß die Erkennung komplexer Fehler auf rein physikalischer Ebene beispielsweise durch Sendepegelerkennung allein nicht mehr möglich ist. Die Auswertung muß auf einer höheren Ebene der Protokollbearbeitung liegen. Es muß erst zumindest ein Teil der seriellen Übertragung als richtig erkannt werden bevor die ausgewählte Linie zum Empfang des Telegramms ausgewählt werden kann. Der überwachte Teil des Telegramms muß mindestens so lang sein, daß Refexionen die eine bestimmte Laufzeit auf dem Bus haben können sicher erkannt werden.

Üblicherweise verwenden Bussysteme für die unteren Schichten des Übertragungsprotokolles spezielle Buscontroller. Wenn diese Controller keine entsprechende Redundanz vorsehen, sind die notwendigen Stellen für die Implementation einer entsprechenden Redundanz, für einen Anwender dieses Controllers nicht mehr zugänglich.

Aus der Veröffentlichung "Automatisierungstechnik" R. Oldenbourg Verlag Wien 1992, Band I, Seite 406 ist bekannt, in einem redundanten Bussystem beim Eintreten eines Umschaltkriteriums den Datenverkehr von dem aktiven Bus auf einen passiven Bus umzuschalten, wobei der jeweils aktive Bus eine vorgebbare Selektion aus gleichartigen und gleichberechtigten Bussen des redundanten Bussystems darstellt. Als Umschaltkriterium sind Ausfälle des aktiven Busses und zyklische Abfragen der Differenz der Transferanforderungen auf dem aktiven und dem passiven Bus vorgesehen.

Aus der DE 195 13 318 ist ein Verfahren zum Betrieb eines asynchronen und redundanten Serienbusses, bestehend aus n>1 parallelen unabhängigen Linien, bekannt, bei dem mindestens zwei aufeinander synchronisierbare Multiplexer vorgesehen sind, die zur bidirektionalen Übertragung von Dateninformationen zwischen einer Serienbusschnittstelle und einer der parallelen Linien geeignet sind. Dabei ist vorgesehen, daß eine Vorzugslinie des redundanten Serienbusses als Primärbus und die n-1 verbleibenden Linien als Ersatzbusse bestimmt werden, daß bei ungestörtem Datenverkehr Dateninformationen zwischen den über die Multiplexer angeschlossenen Stationen über den Primärbus als aktivem Bus ausgetauscht werden und Steuerinformationen zwischen den Multiplexern über mindestens einen vorgebbaren Bus ausgetauscht werden, daß bei Absinken der Übertragungsgüte auf dem aktiven Bus unter eine vorgebbare Schranke ein vorgebbarer Ersatzbus zum aktiven Bus bestimmt wird, eine Fehlermeldung an eine übergeordnete Instanz abgesetzt wird und der deaktivierte Bus analysiert wird und daß bei steigender Übertragungsgüte auf den Primärbus über eine vorgebbare Schranke der Primärbus zum aktiven Bus rückbestimmt wird.

Dabei wird der Aufwand für die Synchronisierung aller Busteilnehmer auf den aktiven Bus sowohl materiell als auch hinsichtlich der dazu erforderlichen Protokollfunktionen als nachteilig angesehen. Da die Synchronisiermittel selbst Busteilnehmer sind, wird darüber hinaus die Anzahl verfügbarer Teilnehmeradressen für anschließbare Stationen reduziert.

Aus der DE 195 13 316 ist ein segmentierbares Ethemet-Bussystem mit n>1 Buslinien zur redundanten Vernetzung von Single-Port-Stationen mit einem Steuerausgang und einem Kommunikationsport bekannt, bei dem bidirektionale Multiplexer mit einem gemultiplexten Port und n Linien-Ports und einem Steuereingang vorgesehen sind. An die n Buslinien eines Ethemet-Segmentes sind mindestens eine Beobachtungseinrichtung mit n Linien-Ports angeschlossen. Jeder Single-Port-Station ist ein Multiplexer zugeordnet, wobei der Kommunikationsport der Single-Port-Station mit dem gemultiplexten Port des Multiplexers und der Steuerausgang der Single-Port-Station mit dem Steuereingang des Multiplexers verbunden sind. Die n Linien-Ports jedes Multiplexers sind an die n Buslinien eines Ethernet-Segmentes angeschlossen.

Nachteiligerweise ist jede Single-Port-Station mit einem Steuerausgang zur Steuerung des Multiplexers auszustatten. Insbesondere bei der Nachrüstung redundanter Buslinien in bestehenden Systemen ist ein derartiger Steuerausgang nicht verfügbar.

Darüber hinaus ist aus der DE 195 13 315 ein segmentierbares Ethernet-Bussystem zur redundanten Vernetzung von Single-Port-Stationen bekannt, bei dem zwei Linien zumindest teilsegmentweise parallel angeordnet sind und zum Anschluß der Single-Port-Stationen an die beiden Linien als aktive Netzteilnehmer adressierbare bidirektionale Multiplexer vorgesehen sind, die durch mindestens eine als aktiver Netzteilnehmer adressierbare Überwachungseinheit steuerbar sind.

Nachteilig ist hierbei die Vielzahl erforderlicher Netzadressen, die die Anzahl der möglichen Single-Port-Stationen in demselben Netz limitiert.

Ferner ist aus der US 5,422,877 eine Bus - Schaltvorrichtung zur Umschaltung eines Busteilnehmers zwischen redundant geführten Serienbussen beschrieben, die integraler Bestandteil des Busteilnehmers ist. Dabei wird mit den Mitteln der Bus - Schaltvorrichtung neben der Auswahl eines von zwei redundant geführten Serienbussen zur Kommunikation gleichzeitig die Protokollumsetzung vom "Physical Layer" des Serienbusses, Ebene 1 des OSI - Referenzmodells (OSI: Open System Interface), auf den "Application Layer", Ebene 7 des OSI - Referenzmodells, vorgenommen. Damit ist diese Vorrichtung zur Vorschaltung vor Single-Port-Stationen ungeeignet.

Darüber hinaus ist aus der US 4,630,265 ein Verfahren und eine Anordnung zur Auswahl eines Datenbusses in einem redundanten Bussystem bekannt, bei dem in Abhängigkeit von dem Vorhandensein von Daten ein statisches Auswahlsignal zur Auswahl eines der parallelen Datenbusse generiert und ausgegeben wird. Dabei wird davon ausgegangen, daß das angeschlossene Kommunikationsgerät für sich zur redundanten Vernetzung geeignet ist. Das Dokument offenbart jedoch keinen Hinweis, wie Busteilnehmer eines für sich bekannten seriellen Bussystems ohne systemintegrierte Redundanzmittel durch redundant ausgeführte Buslinien miteinander zu verbinden sind.

Der Erfindung liegt die Aufgabe zugrunde, Mittel anzugeben, die es gestatten, Busteilnehmer eines für sich bekannten seriellen Bussystems ohne systemintegrierte Redundanzmittel durch redundant ausgeführte Buslinien miteinander zu verbinden. Dabei soll das vorhandene Bussystem möglichst unbeeinflußt bleiben und kompatibel einsetzbar sein. Der Mischbetrieb mit nichtredundanten Teilnehmern soll möglich sein und die Redundanzmittel sollen auch komplexere Fehler wie Busfehlabschlüsse und ähnliches einwandfrei erkennen und verarbeiten.

Erfindungsgemäß wird diese Aufgabe mit den Mitteln des Patentanspruchs 1 gelöst. Vorteilhafte Ausgestaltungen der Erfindung sind in den rückbezogenen Ansprüchen 2 bis 9 beschrieben.

Die Erfindung besteht nun darin, für jede der Empfangslinien, zusätzlich einen Teil des Protokolls in der Vorschalteinrichtung abzuwickeln, um die notwendigen Entscheidungskriterien zu erhalten. Nach der Auswertung wird dann eine als störungsfrei erkannte Linie ausgewählt. Die ausgewählte Linie wird dann derart in das ursprüngliche Signal zurückgewandelt, daß sie in den normalen Kommunikationscontroller oder das Gerät eingelesen werden kann.

Die Erfindung geht dabei von der Erfahrung aus, daß Störungen des Übertragungsweges üblicherweise in der Preambel oder bei UART-Protokollen während der Übertragung des ersten Bytes erkannt werden können.

Erfindungsgemäß ist eine Vorschalteinrichtung vorgesehen, an die einerseits redundant ausgeführte Buslinien und andererseits Teilnehmer oder Geräte ohne systemintegrierte Redundanzmittel angeschlossen sind, wobei jeweils eine der Buslinien mit dem angeschlossenen Teilnehmer oder Gerät unter vollständigem Verzicht auf systemintegrierte Redundanzmittel verbunden ist.

Gesendet wird bei solch redundanten Bussystemen immer auf allen Linien, während beim Empfang eine beliebige störungsfreie Linie ausgewählt wird. Das bedeutet, daß verschiedene, an denselben Buslinien angeschlossene Empfänger verschiedene Buslinien als störungsfrei erkennen können.

In vorteilhafter Weise sind die verfügbaren Buscontroller weiterhin verwendbar. Darüber hinaus sind bestehende Geräte mit Buscontrollern ohne systemintegrierte Redundanzmittel auf einfache Weise bei unveränderter Systemarchitektur redundant vernetzbar. Auf zusätzliche Teilnehmeradressen für Synchronisiermittel kann verzichtet werden.

Das Konzept der vorgeschalteten Redundanz gilt für alle Arten der seriellen Kommunikation und wird auf der Ebene des Physical Layers implementiert. Bei der Redundanz wird, in Abhängigkeit der Gültigkeit eines Datenstroms, eine Auswahl von 1 aus n (n >= m+1) Empfangslinien vorgenommen. Die Auswahl gilt für die Dauer eines Übertragungsblockes (Frame). Gesendet wird auf allen Sendelinien. Empfangs- und Sendelinien können zu einer bidirektionalen Buslinie zusammengefaßt sein.

Die Erfindung wird nachstehend anhand eines Ausführungsbeispiels mit zwei parallelen Buslinien näher erläutert. Die dazu erforderlichen Zeichnungen zeigen
- Figur 1: eine Prinzipdarstellung eines redundanten Bussystems
- Figur 2: ein Blockschaltbild eines vorschaltbaren Redundanzmittels
- Figur 3: eine Prinzipdarstellung eines redundanten Bussystems mit Überwachung
- Figur 4: ein Blockschaltbild eines vorschaltbaren Redundanzmittels mit Überwachung

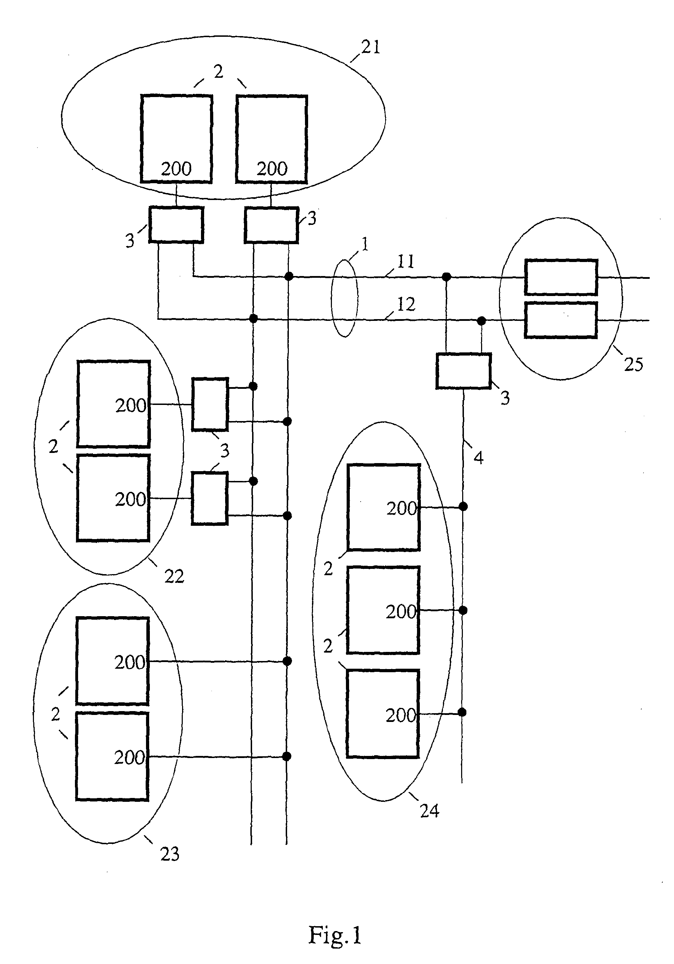

Ein redundantes Bussystem nach Maßgabe der Erfindung ist prinzipiell in Figur 1 dargestellt. An einen redundanten Serienbus 1, der aus zwei Buslinien 11 und 12 besteht, sind Gruppen 21 bis 25 von Busteilnehmern 2 angeschlossen, wobei jeder der Busteilnehmer 2 über eine einzige, redundanzfreie Buskommunikations-Schnittstelle 200 verfügt.

Die Busteilnehmer 2 der ersten und zweiten Gruppe 21 und 22 sind jeweils über ein teilnehmerindividuelles, vorschaltbares Redundanzmittel 3 an beide Buslinien 11 und 12 des redundanten Serienbusses 1 angeschlossen. Die Busteilnehmer 2 der vierten Gruppe 24 sind über einen redundanzfreien Serienbus 4 und ein gemeinsames, vorschaltbares Redundanzmittel 3 an beide Buslinien 11 und 12 des redundanten Serienbusses 1 angeschlossen. Die Busteilnehmer 2 der dritten Gruppe 23 sind ausschließlich an die Buslinie 11 des redundanten Serienbusses 1 angeschlossen. Der Anschluß an eine der Buslinien 11 oder 12 ist dabei vorteilhafterweise wahlfrei und mischbar. Auf eine Vorzugslage wird dabei verzichtet.

In besonders vorteilhafter Weise ist die Redundanz des Serienbusses 1 entsprechend den Anforderungen an die Verfügbarkeit der einzelnen Busteilnehmer 2 skalierbar. Darüber hinaus ist der Mischbetrieb redundant und nichtredundant angeschlossener Teilnehmer 2 an demselben redundanten Serienbus 1 ermöglicht.

Die fünfte Gruppe 25 umfaßt sogenannte Repeater, die jeweils zur Verbindung einer Buslinie 11 und 12 eines ersten Segments mit jeweils einer Buslinie eines zweiten Segments desselben Bussystems vorgesehen sind.

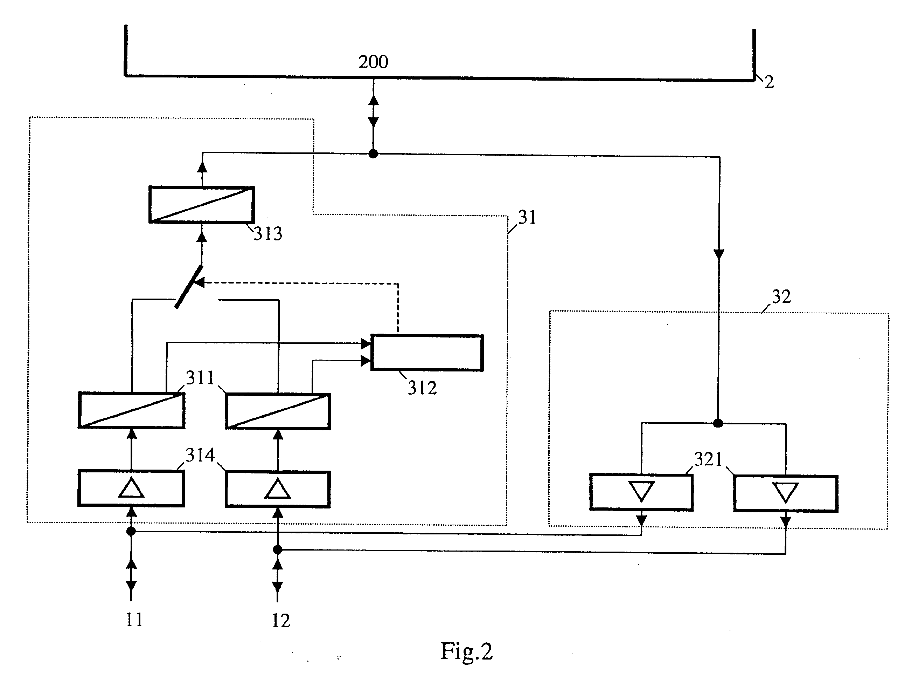

Der prizipielle Aufbau eines vorschaltbaren Redundanzmittels 3 ist in Figur 2 dargestellt. Das vorschaltbare Redundanzmittel 3 ist mit einem Empfänger 31 und einem Sender 32 ausgestattet. Der Empfänger 31 umfaßt zumindest für jede Buslinie 11 und 12 jeweils eine Eingangsstufe 311, eine Auswertestufe 312 und eine Ausgangsstufe 313. Die Eingangsstufe 311 ist mit Mitteln zur Synchronisierung, Filterung und Seriell-Parallel-Wandlung ausgestattet. Darüber hinaus können auch Mittel zur Auswertung des Datenstromes vorgesehen sein (Parity,Framing...) und die Zustände an die Auswertestufe 312 weitergeleitet werden. Zweckmäßigerweise ist der Eingangsstufe 311 ein Verstärker 314 vorgeschaltet, der Mittel zur Anpassung der Eingangsstufe 311 an das physische Übertragungsmedium der Buslinie 11 und 12 des redundanten Serienbusses 1 aufweist.

Die Auswertestufe 312 umfaßt Mittel zur Auswertung des Datenstroms, zur Zeitauswertung, zur Bewertung des Zustands der Empfangslinien und zur Linienauswahl.

Die Ausgangsstufe 313 weist Mittel zur Parallel-Seriell-Wandlung, zur Stummschaltung bei fehlerhaften Empfangsdaten und Treiberstufen (RS485,RS232,LWL, ...) zur Anpassung an die redundanzfreie Buskommunikations-Schnittstelle 200 der Busteilnehmer 2 auf. Alternativ kann vorgesehen sein, den seriellen, über die Empfangserkennungszeit verzögerten Datenstrom von der Eingangsstufe 311 direkt an die Ausgangsstufe 313 weiterzuleiten. Dann ist die Parallel-Seriell-Wandlung verzichtbar.

In der Eingangsstufe 311 wird das Empfangssignal über ein Filter auf eine Synchronisierstufe geführt. In der Synchronisierstufe wird der Empfänger 31 auf den Datenstrom synchronisiert. Die Übertragungsgeschwindigkeit kann konfiguriert oder automatisch erkannt werden. Für die automatische Geschwindigkeitserkennung wird der eingehende Datenstrom ausgewertet. Der Datenstrom kann seriell oder parallel an die Auswertestufe 312 weitergereicht werden.

In der Auswertestufe 312 erfolgt die Auswahl der Empfangslinie 11 oder 12 anhand von Kriterien die aus dem seriellen oder parallelen Datenstrom, dem Zeitverhalten und dem Zustand der Empfangslinie 11 und 12 ermittelt werden. Als Kriterien aus dem Datenstrom gelten Frameerror, Parityerror, Preambeln, Sychronisiersequenzen u.s.w. Weitere Kriterien werden aus dem Zeitverhalten, aus Pausenzeiten im Datentransfer oder aus der Datentransferdauer abgeleitet. Auch eine zeitabhängige Umschaltstrategie kann Kriterien liefern. Ein Auswahlkriterium das den Zustand der Empfangslinie 11 und 12 kennzeichnen kann ist auch der Signalpegel, der eine Über- oder Unterlast anzeigt.

In der Ausgangsstufe 313 wird für den Datenstrom, der als gültig erkannt und ausgewählt wurde, ein Bit-Retiming durchgeführt und über eine Treiberstufe ausgegeben. Die in dem vorschaltbaren Redundanzmittel 3 auftretende Zeitverzögerung ist unkritisch, weil sie im Bereich der Kabellaufzeiten (Refexionslaufzeit) liegt. Wird kein gültiger Datenstrom erkannt, so liefert die Ausgangsstufe 313 die Ruhelage als Ausgangssignal.

Sendeseitig weist das vorschaltbare Redundanzmittel 3 einen Sender 32 mit jeweils einem Treiber 321 für jede Buslinie 11 und 12 des redundanten Serienbusses 1 auf. Der zu sendende Datenstrom wird über die Treiber 321 auf allen Buslinien 11 und 12 ausgegeben.

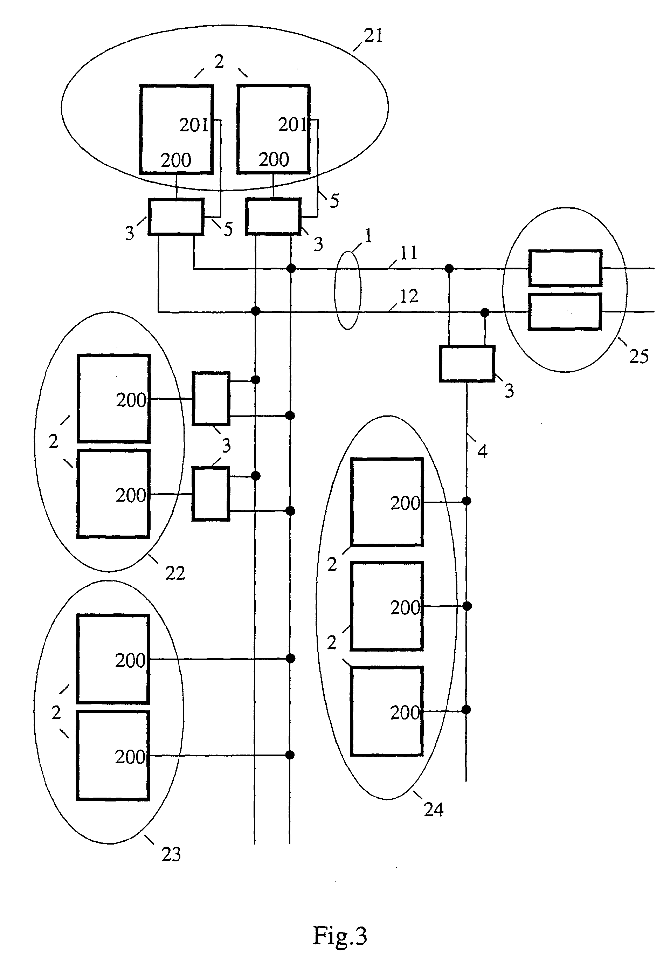

Unter Verwendung gleicher Bezugszeichen für gleiche Mittel ist in Figur 3 ein redundantes Bussystem prinzipiell dargestellt, bei dem ausgewählte Busteilnehmer 2 mit Diagnosemitteln ausgestattet sind. Dabei sind die ausgewählten Busteilnehmer 2 der ersten Teilnehmergruppe 21 mit einer zusätzlichen Diagnose-Schnittstelle 201 ausgestattet und mittels zusätzlicher Steuerleitungen 5 mit dem zugeordneten, vorschaltbaren Redundanzmittel 3 verbunden.

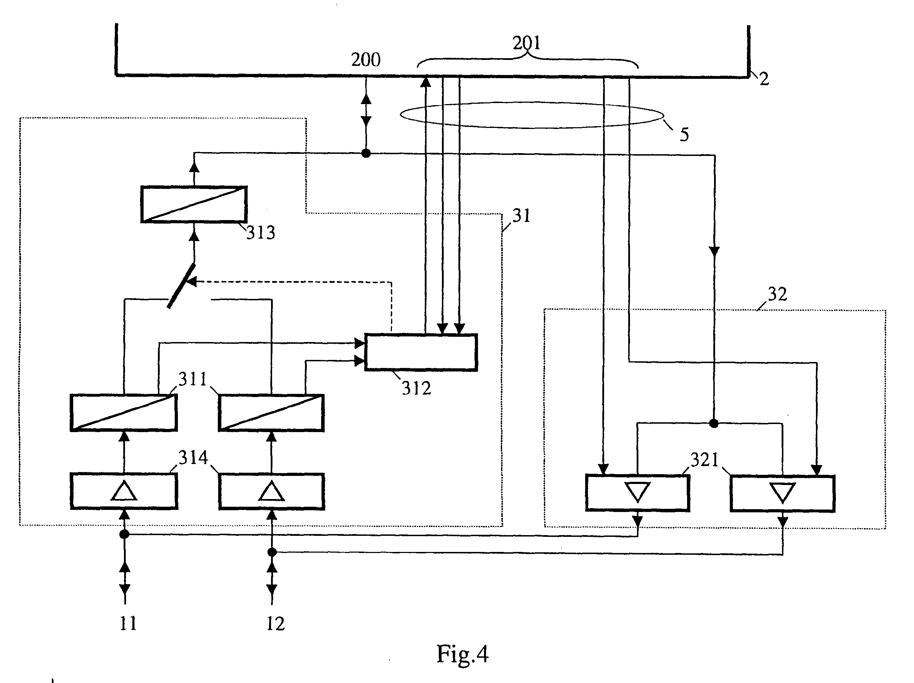

Dazu ist in Figur 4 ein Blockschaltbild eines vorschaltbaren Redundanzmittels 3 mit zusätzlichen Steuerleitungen 5 für die Überwachung und Diagnose dargestellt. Die Auswertestufe 312 des Empfängers 31 weist einen Ausgang zur Ausgabe von Statusinformationen und Eingänge zur Selektion einer dedizierten Buslinie 11 oder 12 als Empfangslinie auf, die über jeweils eine der zusätzlichen Steuerleitungen 5 mit der zusätzlichen Diagnose-Schnittstelle 201 des ausgewählten Busteilnehmer 2 der ersten Teilnehmergruppe 21 verbunden.

Darüber hinaus weist der Empfänger 31 Mittel zum Test und zur Diagnose auf, die es gestatten, den Empfänger 31 auf verschiedene Betriebsarten einzustellen. Neben der als Normalbetrieb bezeichneten Auswahl einer Buslinie 11 oder 12 als Empfangslinie in Abhängigkeit von der Gültigkeit eines Datenstroms ist darüber hinaus der Empfang auf einer fest eingestellten Buslinie 11 oder 12 vorgesehen, wobei die Auswertestufe 312 an- und abgeschaltet sein kann.

Für Test- und Diagnosezwecke ist der Empfänger 31 so konfigurierbar, daß ausschließlich auf einer bestimmten Buslinie 11 oder 12 empfangen wird. Hierbei kann vorgesehen sein, für die ausgewählte Buslinie 11 oder 12 eine direkte Verbindung zwischen dem Eingang und dem Ausgang des Empfängers 31 zu schalten. Dazu wird die Auswertestufe 312 des Empfängers 31 durch den ausgewählten Busteilnehmer 2 über die Steuerleitungen 5 entsprechend initialisiert.

Sendeseitig ist für Test- und Diagnosezwecke vorgesehen, den Datenstrom individuell konfigurierbar auf ausschließlich einer oder mehreren Buslinien 11 und 12 auszugeben. Dazu sind die Treiber 321 des Senders 32 mit Torschaltungen ausgestattet, mit denen der Ausgang des jeweiligen Treibers 321 stummgeschaltet wird. Jede Torschaltung weist einen Steuereingang auf, der über eine der Steuerleitungen 5 mit der Diagnose-Schnittstelle 201 des ausgewählten Teilnehmers 2 verbunden ist.

Während der Diagnose kann ein ausgewählter Teilnehmer gezielt Daten über eine und dieselbe ausgewählte Buslinie 11 oder 12 senden und empfangen. Durch dieses Verfahren wird eine defekte Buslinie 11 und 12 erkannt und einer übergeordneten Einrichtung gemeldet.

### Bezugszeichenliste

- 1: redundanter Serienbus
- 11, 12: Buslinien

- 2: Busteilnehmer
- 21 ... 25: Teilnehmergruppen
- 200: Buskommunikations-Schnittstelle
- 201: Diagnose-Schnittstelle

- 3: vorschaltbares Redundanzmittel
- 31: Empfänger
- 311: Eingangsstufe
- 312: Auswertestufe
- 313: Ausgangsstufe
- 314: Verstärker
- 32: Sender
- 321: Treiber

- 4: redundanzfreier Serienbus
- 5: Steuerleitungen

## Patentansprüche

1. Redundanter Serienbus mit n >1 parallelen Buslinien zur redundanten Vernetzung von Busteilnehmern mit jeweils einer einzigen Buskommunikations-Schnittstelle, die zum Anschluss einer einzigen Buslinie des Serienbusses geeignet ist, unter Verwendung eines vorgegebenen Übertragungsprotokolls,
**dadurch gekennzeichnet,**
- **dass** ein vorschaltbares Redundanzmittel (3) mit n Buskommunikations-Schnittstellen zum Anschluß an n parallele Buslinien (11, 12) und einer Buskommunikations-Schnittstelle zur Verbindung mit der einzigen Buskommunikations-Schnittstelle (200) mindestens eines Busteilnehmers (2) vorgesehen ist,
- **dass** das vorschaltbare Redundanzmittel (3) empfangsseitig mindestens für jede Buslinie (11, 12) eine Eingangsstufe (311) und für alle Buslinien (11, 12) eine gemeinsame Auswertestufe (312) und Ausgangsstufe (313) aufweist,
- **dass** die Auswertestufe (312) Mittel zur Bewertung der Gültigkeit eines Datenstroms, in dem ein Teil des Protokolls abgewickelt wird, und zur Auswahl einer der Buslinien (11, 12) als Empfangslinie aufweist, so dass das Ausgangssignal der Ausgangsstufe (313) mit einem der Signale auf den Buslinien (11, 12) übereinstimmt,
- **dass** das vorschaltbare Redundanzmittel (3) sendeseitig für jede Buslinie (11, 12) einen Treiber (321) aufweist und
- **dass** der zu sendende Datenstrom über die Treiber (321) auf allen Buslinien (11, 12) ausgegeben wird.

2. Redundanter Serienbus nach Anspruch 1
**dadurch gekennzeichnet,**
**daß** die Eingangsstufe (311) Mittel zur Synchronisation und Filterung aufweist.

3. Redundanter Serienbus nach einem der Ansprüche 1 und 2
**dadurch gekennzeichnet,**
**daß** die Eingangsstufe (311) Mittel zur Seriell-Parallel-Wandlung aufweist.

4. Redundanter Serienbus nach Anspruch 3
**dadurch gekennzeichnet,**
**daß** die Ausgangsstufe (313) Mittel zur Parallel-Seriell-Wandlung aufweist.

5. Redundanter Serienbus nach Anspruch 1
**dadurch gekennzeichnet,**
**daß** die Auswertestufe (312) Mittel zur Auswertung des Datenstromes, zur Zeitauswertung, zur Bewertung des Zustands der Empfangslinien und zur Linienauswahl aufweist.

6. Redundanter Serienbus nach einem der Ansprüche 1 bis 5
**dadurch gekennzeichnet,**
**daß** das vorschaltbares Redundanzmittel (3) empfangsseitig auf eine Buslinie (11, 12) fest einstellbar ist.

7. Redundanter Serienbus nach einem der Ansprüche 1 bis 5
**dadurch gekennzeichnet,**
**daß** das vorschaltbares Redundanzmittel (3) sendeseitig auf eine Buslinie (11, 12) fest einstellbar ist.

8. Redundanter Serienbus nach Anspruch 7
**dadurch gekennzeichnet,**
**daß** jeder Treiber (321) eine Torschaltung zur Stummschaltung des Treiberausgangs umfaßt.

9. Redundanter Serienbus nach einem der Ansprüche 1 bis 8
**dadurch gekennzeichnet,**
- **daß** mindestens ein ausgewählter Busteilnehmer (2) mit einer Diagnose-Schnittstelle (201) zum Anschluß von Steuerleitungen (5) ausgestattet ist,
- **daß** die Auswertestufe (312) des vorschaltbaren Redundanzmittels (3) mit Anschlüssen zum Anschluß von Steuerleitungen (5) ausgestattet ist und
- **daß** die Torschaltungen der Treiber (321) Steuereingänge aufweisen, die mit Steuerleitungen (5) mit der Diagnose-Schnittstelle (201) verbunden sind.

## Claims

1. Redundant serial bus, comprising n > 1 parallel bus lines for the redundant networking of bus subscribers, each having a single bus communication interface which is suitable for the connection of a single bus line of the serial bus, using a pre-specified transmission protocol, **characterised**
- **in that** a redundancy means (3) which can be connected upstream is provided with n bus communication interfaces for connection to n parallel bus lines (11, 12) and with a bus communication interface for connection to the single bus communication interface (200) of at least one bus subscriber (2),
- **in that** the redundancy means (3) which can be connected upstream has at the receiving end at least one input stage (311) for each bus line (11, 12) and a shared evaluation stage (312) and output stage (313) for all the bus lines (11, 12),
- **in that** the evaluation stage (312) comprises means for evaluating the validity of a data stream in which a part of the protocol is processed and for selecting one of the bus lines (11, 12) as the receiving line in such a way that the output signal of the output stage (313) corresponds to one of the signals on the bus lines (11, 12),
- **in that** the redundancy means (3) which can be connected upstream has at the transmitting end a driver (321) for each bus line (11, 12), and
- **in that** the data stream which is to be sent is transmitted on all bus lines (11, 12) via the drivers (321).

2. Redundant serial bus according to claim 1, **characterised in that** the input stage (311) comprises means for synchronisation and filtering.

3. Redundant serial bus according to either claim 1 or claim 2, **characterised in that** the input stage (311) comprises means for serial-parallel conversion.

4. Redundant serial bus according to claim 3, **characterised in that** the output stage (313) comprises means for parallel-serial conversion.

5. Redundant serial bus according to claim 1, **characterised in that** the evaluation stage (312) comprises means for evaluating the data stream, for time evaluation, for assessment of the state of the receiving lines and for line selection.

6. Redundant serial bus according to any one of claims 1 to 5, **characterised in that** the redundancy means (3) which can be connected upstream can be permanently set to one bus line (11, 12) on the receiving side.

7. Redundant serial bus according to any one of claims 1 to 5, **characterised in that** the redundancy means (3) which can be connected upstream can be permanently set to one bus line (11, 12) on the transmitting side.

8. Redundant serial bus according to claim 7, **characterised in that** each driver (321) comprises a gate circuit for muting the driver output.

9. Redundant serial bus according to any one of claims 1 to 8, **characterised**
- **in that** at least one selected bus subscriber (2) is provided with a diagnosis interface (201) for the connection of control lines (5),
- **in that** the evaluation stage (312) of the redundancy means (3) which can be connected upstream is provided with terminals for the connection of control lines (5), and
- **in that** the gate circuits of the drivers (321) comprise control inputs which are connected to the diagnosis interface (201) by control lines (5).

## Revendications

1. Bus série redondant ayant n > 1 lignes de bus parallèles pour relier en réseau redondant des utilisateurs de bus avec chacun une seule interface de communication de bus qui convient au raccordement d'une seule ligne de bus du bus série en utilisant un protocole de transfert donné,
**caractérisé en ce que**
- il est prévu un moyen de redondance (3) pouvant être placé en amont avec n interfaces de communication de bus pour le raccordement à n lignes de bus parallèles (11, 12) et une seule interface de communication de bus pour la liaison avec l'unique interface de communication de bus (200) d'au moins un utilisateur de bus (2),
- le moyen de redondance (3) pouvant être placé en amont présente côté réception au moins pour chaque ligne de bus (11, 12) un étage d'entrée (311) et pour toutes les lignes de bus (11, 12) un étage d'évaluation (312) commun et un étage de sortie (313),
- l'étage d'évaluation (312) présente des moyens destinés à l'évaluation de la validité d'un flux de données dans lequel se déroule une partie du protocole et à la sélection de l'une des lignes de bus (11, 12) en tant que ligne de réception, de telle manière que le signal de sortie de l'étage de sortie (313) coïncide avec l'un des signaux sur les lignes de bus (11, 12),
- le moyen de redondance (3) pouvant être placé en amont présente côté émission un driver (321) pour chaque ligne de bus (11, 12) et
- le flux de données à envoyer est émis par le biais des drivers (312) sur toutes les lignes de bus (11, 12).

2. Bus série redondant selon la revendication 1,
**caractérisé en ce que** l'étage d'entrée (311) présente des moyens destinés à la synchronisation et au filtrage.

3. Bus série redondant selon l'une des revendications 1 et 2,
**caractérisé en ce que** l'étage d'entrée (311) présente des moyens destinés à la conversion série-parallèle.

4. Bus série redondant selon la revendication 3,
**caractérisé en ce que** l'étage de sortie (313) présente des moyens destinés à la conversion parallèle-série.

5. Bus série redondant selon la revendication 1,
**caractérisé en ce que** l'étage d'évaluation (312) présente des moyens destinés à l'évaluation du flux de données, à l'évaluation de temps, à l'évaluation de l'état des lignes de réception et à la sélection de ligne.

6. Bus série redondant selon l'une des revendications 1 à 5,
**caractérisé en ce que** le moyen de redondance (3) pouvant être placé en amont peut être réglé rigidement sur une ligne de bus (11, 12) côté réception.

7. Bus série redondant selon l'une des revendications 1 à 5,
**caractérisé en ce que** le moyen de redondance (3) pouvant être placé en amont peut être réglé rigidement sur une ligne de bus (11, 12) côté émission.

8. Bus série redondant selon la revendication 7,
**caractérisé en ce que** chaque driver (321) comporte un circuit de porte destiné à couper le son de la sortie de driver.

9. Bus série redondant selon l'une des revendications 1 à 8,
**caractérisé en ce que**
- au moins un utilisateur de bus (2) sélectionné est équipé d'une interface de diagnostic (201) pour le raccordement de lignes de commande (5),
- l'étage d'évaluation (312) du moyen de redondance (3) pouvant être placé en amont est équipé de raccordements destinés au branchement de lignes de commande (5) et
- les circuits de porte des drivers (321) présentent des entrées de commande qui sont reliées à l'interface de diagnostic (201) par les lignes de commande (5).
